# EUROPEAN PATENT APPLICATION

(11) **EP 1 780 249 A1**
(43) Date of publication of application: **02.05.2007**
(21) Application number: 05775165.3
(22) Date of filing: 17.08.2005
(51) Int. Cl.: C09D 123/26, B05D 7/02, B05D 7/24, C09D 5/00, C09D 133/00, C09D 151/06, C09D 161/20, C09D 167/00, C09D 175/04, C09D 193/00

(54) **WATER-BASED PRIMER COMPOSITION**

(30) Priority: 19.08.2004 JP 2004239379
(71) Applicant: KANSAI PAINT CO., LTD., Amagasaki-shi, Hyogo-ken 661-8555 (JP)
(72) Inventor: NAGANO, Toshiaki, Yokohama-shi, Kanagawa 244-0816 (JP); TAKAHASHI, Terutaka, Hiratsuka-shi, Kanagawa 254-0083 (JP); SUGAI, Hideo, Hiratsuka-shi, Kanagawa 254-0019 (JP)
(74) Representative: Albrecht, Thomas
(86) International application number: PCT/JP2005/015297
(87) International publication number: WO 2006/019171

(57) **Abstract**

The present invention discloses an aqueous primer composition comprising: (A) an aqueous dispersion of a non-chlorine-based modified polyolefin comprising the dispersion of an unsaturated carboxylic acid- or acid anhydride-modified polyolefin (a), having a melting point of 120°C or lower and a weight average molecular weight within the range of 50,000 to 150,000, in an aqueous medium; (B) a water-soluble or water-dispersible polyol resin; and (C) a pigment, wherein the solid content weight ratio of component (A) to component (B) is within the range of 20/80 to 85/15, and component (C) is contained within the range of 0.5 to 200 parts by weight based on 100 parts by weight of the total resin solid content in the composition; and a method for coating a plastic molded product using the aqueous primer composition.

## Description

### TECHNICAL FIELD

The present invention relates to a non-chlorine-based, aqueous primer composition capable of forming a coated film having superior adhesion, water resistance and solvent resistance, and to a method for coating plastic molded products using this composition.

### BACKGROUND ART

Polyethylene, polypropylene and other polyolefin molded products are coming to be frequently used as members of automobile exterior panels, home appliances and the like as an alternative to metal molded products. Since polyolefins are non-polar and typically present difficulties in adhesion and coating, in the case of applying a top coating paint to these molded products, the molded product is normally pre-coated with a primer containing a chlorinated polyolefin that imparts polarity in order to improve adhesion between the top coating paint and the molded product.

However, for polyolefin molded products, previous rubber components (such as styrene butadiene rubber or isoprene rubber) and hydroxyl group-containing polyolefins are being increasingly used in smaller amounts or not added at all for reasons of physical properties, costs and so on, thus resulting in the problem of decreased adhesion between the primer containing a chlorinated polyolefin and the molded product.

On the other hand, in order to solve this problem, Japanese Patent Application Laid-open No. 2002-121462 discloses a primer comprising a specific chlorinated polyolefin and a specific blocked polyisocyanate used in combination with a polyol resin. Although this primer is used in the form of an aromatic-based organic solvent due to the relationship with the solubility of the chlorinated polyolefin used, aqueous primers have come to be sought after in recent years from the viewpoints of safety, health and environmental protection.

In order to respond to this need, Japanese Patent Application Laid-open No. 2003-327761 and Japanese Patent Application Laid-open No. 2004-91559 disclose an aqueous resin composition obtained by an emulsification polymerization reaction of a carboxyl group-containing chlorinated polyolefin-based random copolymer based on a propylene-based random copolymer polymerized in the presence of metallocene catalyst, an aqueous dispersion containing a stabilizer dispersed therein, and a polymerizable unsaturated monomer in the aqueous dispersion.

Although chlorinated polyolefins were considered to be required to be used in polyolefin-based primers from the viewpoints of compatibility with other components in the primer and adhesion with the formed coated film, there is a strong demand for the development of an aqueous primer not containing chlorine from the viewpoint of environmental protection.

### DISCLOSURE OF THE INVENTION

A main object of the present invention is to provide a non-chlorine-based, aqueous primer composition capable of forming a coated film having superior adhesion, water resistance and solvent resistance without affecting the compatibility with other components used in the primer even if using a non-chlorine-based polyolefin, and a method for coating plastic molded products using the composition.

As a result of conducting extensive studies, the inventors of the present invention found that the above-mentioned object can be achieved by blending an aqueous dispersion of a specific non-chlorine-based polyolefin, a polyol resin and a pigment at a specific ratio, thereby leading to completion of the present invention.

Thus, the present invention provides an aqueous primer composition comprising:
(A) an, aqueous dispersion of a non-chlorine-based modified polyolefin comprising the dispersion of an unsaturated carboxylic acid- or acid anhydride-modified polyolefin (a), having a melting point of 120°C or lower and a weight average molecular weight within the range of 50,000 to 150,000, in an aqueous medium,
(B) a water-soluble or water-dispersible polyol resin, and
(C) a pigment;
wherein the solid content weight ratio of component (A) to component (B) is within the range of 20/80 to 85/15, and component (C) is contained within the range of 0.5 to 200 parts by weight based on 100 parts by weight of the total resin solid content in the composition.

Furthermore, in the present description, the "total resin solid content in the composition" refers to the total solid content of the component (A), the component (B) and a crosslinking agent (D) to be described hereinafter, contained in the aqueous primer composition.

The present invention also provides a method for coating a plastic molded product comprising: applying the above-mentioned aqueous primer composition to a plastic molded product, and then sequentially applying a colored base paint and a clear paint to the coated surface thereof.

According to the present invention, by blending a polyol resin and a pigment into an aqueous dispersion of a specific non-chlorine-based polyolefin at a specific ratio, a primer coated film can be formed having superior adhesion, water resistance and solvent resistance without causing any problems with compatibility with other components used in the primer composition even if using a non-chlorine-based polyolefin.

The following provides a more detailed explanation of the aqueous primer composition and method for coating a plastic molded product using the composition of the present invention.

### Aqueous Dispersion of Non-Chlorine-Based Modified Polyolefin (A):

The aqueous dispersion of a non-chlorine-based modified polyolefin (A) used in the aqueous primer composition of the present invention comprises dispersing an unsaturated carboxylic acid- or acid anhydride-modified polyolefin (a) in an aqueous medium.

The unsaturated carboxylic acid- or acid anhydride-modified polyolefin (a) can ordinarily be obtained by graft copolymerizing an unsaturated carboxylic acid or acid anhydride with a polyolefin using a method known per se. The unsaturated carboxylic acid or acid anhydride capable of being used for modification includes aliphatic carboxylic acids or acid anhydrides thereof containing at least one, and preferably one, polymerizable double bond in a molecule thereof, not containing chlorine and having 3 to 10 carbon atoms, specific examples of which include (meth)acrylic acid, maleic acid, fumaric acid, itaconic acid and maleic anhydride, with maleic acid and maleic anhydride being particularly preferable. Although the amount of graft copolymerization by the unsaturated carboxylic acid or acid anhydride thereof with respect to the polyolefin can be varied according to the desired physical properties of the modified polyolefin, it is typically within the range 1 to 20% by weight, preferably 1.5 to 15% by weight, and more preferably 2 to 10% by weight, based on the solid content weight of the polyolefin.

On the other hand, the polyolefin used for modification includes non-chlorinated polyolefins comprised by (co)polymerizing one or more types of olefins having 2 to 10 carbon atoms such as ethylene, propylene, butylenes or hexene, and those containing propylene as a polymerized unit thereof are particularly preferable. The weight ratio of the propylene unit in the modified polyolefin is typically within the range of 0.5 to 1, particularly 0.7 to 0.99 and more particularly 0.8 to 0.99, from the viewpoints of compatibility with other components and adhesion of the formed coated film.

Although known non-chlorinated polyolefins can be used without any particular limitations for the polyolefin, that produced by (co)polymerizing an olefin using a single-site catalyst for the polymerization catalyst is preferable from the viewpoints of a narrow molecular weight distribution of the resulting polyolefin and superior random polymerizability. Single-site catalysts are polymerization catalysts having a uniform active site structure (single site), and metallocene-based catalysts are particularly preferable single-site catalysts. The metallocene-based catalysts can be prepared by combining a metallocene in the form of a transition metal compound of groups 4 to 6 or 8 of the periodic table or rare earth transition metal compound of group 3 of the periodic table having at least one conjugated five-member ring (bis(cyclopentadienyl)metal complex and derivatives thereof), a co-catalyst such as aluminoxane or boron that catalyzes the metallocene, and an organic aluminum compound such as trimethyl aluminum. Olefin (co)polymerization can be carried out using a known method, such as by supplying an olefin such as propylene or ethylene and hydrogen to a reaction vessel while continuously adding an alkyl aluminum and metallocene.

The above-mentioned unsaturated carboxylic acid- or acid anhydride-modified polyolefin (a) may be further acrylic-modified as necessary. Examples of acrylic unsaturated monomers able to be used for the acrylic-modification include those not containing chlorine in the manner of C₁ to C₂₀ alkyl esters of (meth)acrylic acid such as methyl (meth)acrylate, ethyl (meth)acrylate, propyl (meth)acrylate, butyl (meth)acrylate, hexyl (meth)acrylate, cyclohexyl (meth)acrylate, 2-ethylhexyl (meth)acrylate, lauryl (meth)acrylate or stearyl (meth)acrylate; C₁ to C₂₁ hydroxyalkyl esters of (meth)acrylic acid such as 2-hydroxyethyl (meth)acrylate or 3-hydroxypropyl (meth)acrylate; other acrylic monomers such as (meth)acrylic acid, glycidyl (meth)acrylate, (meth)acrylamide or (meth)acrylonitrile; and, styrene. These can each be used alone or two or more types can be used in combination.

Furthermore, in the present description, "(meth)acrylic" refers to "acrylic or methacrylic", while "(meth)acrylate" refers to "acrylate or methacrylate".

Acrylic modification of the polyolefin can be carried out by, for example, first introducing a polymerizable unsaturated group into the polyolefin by reacting with a chlorine-free acrylic unsaturated monomer such as glycidyl (meth)acrylate having reactivity with respect to the carboxyl group in the unsaturated carboxylic acid- or acid anhydride-modified polyolefin produced in the manner described above, followed by combining one or more types of the acrylic unsaturated monomer with the polymerizable unsaturated group and (co)polymerizing. Although the amount of the acrylic unsaturated monomer used for acrylic modification of the polyolefin can be varied according to the desired physical properties of the modified polyolefin, it is typically 30% by weight or less, particularly within the range of 0.1 to 20% by weight, and more particularly 0.15 to 15% by weight based on the solid content weight of the resulting modified polyolefin (a).

The unsaturated carboxylic acid- or acid anhydride-modified polyolefin (a) has a melting point of 120°C or lower, preferably within the range of 30 to 110°C and more preferably 50 to 100°C, and has a weight average molecular weight (Mw) within the range of 50,000 to 150,000, preferably 55,000 to 135,000 and more preferably 60,000 to 120,000 in consideration of compatibility with other components, adhesion of the formed coated film with the plastic molded product, and interlayer adhesion with the top coating paint film layer. In addition, the unsaturated carboxylic acid- or acid anhydride-modified polyolefin (a) typically has a melting calorific value within the range of 1 to 50 mJ/mg and particularly 2 to 50 mJ/mg in consideration of adhesion of the formed coated film to the plastic molded product and interlayer adhesion with the top coating paint film layer.

Here, the melting point and melting calorific value of the modified polyolefin (a) are obtained by measuring the amount of heat while raising the temperature from -100 to 150°C at a rate of 10°C/min using 20 mg of the modified polyolefin with the DSC-5200 Differential Scanning Calorimeter (trade name, Seiko Instruments Inc.). The melting point of the modified polyolefin (a) can be adjusted by changing the amount of the α-olefin in particular in the polyolefin monomer composition. In addition, in the case of difficulty in determining the melting calorific value, the calorific value can be measured using the method described above after temporarily heating the measurement sample to 120°C followed by cooling to room temperature at the rate of 10°C/min and then allowing to stand undisturbed for 2 days or more.

In addition, the weight average molecular weight of the modified polyolefin refers to the value obtained by converting the weight average molecular weight as determined by gel permeation chromatography based on the weight average molecular weight of polystyrene, the HLC/GPC 150C (Water, 60 cm x 1) is used for the gel permeation chromatography apparatus while o-dichlorobenzene is used for the solvent, and the value is measured at a column temperature of 135°C and flow rate of 1.0 ml/min. The injection sample was prepared by dissolving the polyolefin in the o-dichlorobenzene for 1 to 3 hours at 140°C so that the solution concentration is 5 mg of polyolefin to 3.4 ml of o-dichlorobenzene. Furthermore, the GMH_{HR}-H(S)HT column (trade name, Tosoh Corporation) can be used for the column for gel permeation chromatography.

Moreover, the ratio (Mw/Mn) of the weight average molecular weight to the number average molecular weight of the unsaturated carboxylic acid- or acid anhydride-modified polyolefin (a) is typically within the range of 1.5 to 7.0, preferably 1.8 to 6.0, and more preferably 2.0 to 4.0.

The aqueous dispersion of a non-chlorine-based modified polyolefin (A) used in the present invention is an aqueous dispersion of the previously described unsaturated carboxylic acid- or acid anhydride-modified polyolefin (a), is obtained by dispersing in an aqueous medium such as water, and can ordinarily be obtained by neutralizing all or a portion of the carboxyl groups in the unsaturated carboxylic acid- or acid anhydride-modified polyolefin (a) with an amine compound and/or putting into an aqueous dispersion with an emulsifier. The combined use of neutralization and putting into an aqueous diffusion with an emulsifier is preferable with respect to improving aqueous dispersivity.

Examples of amines used for neutralization include tertiary amines such as triethylamine, tributylamine, dimethyl ethanolamine or triethanolamine; secondary amines such as diethylamine, dibutylamine, diethanolamine or morpholine; and, primary amines such as propylamine or ethanolamine. The amount used in the case of using these amine compounds is normally within the range of 0.1 to 1.0 molar equivalents with respect to the carboxyl groups in the unsaturated carboxylic acid- or acid anhydride-modified polyolefin (a).

Examples of the above-mentioned emulsifier include nonionic emulsifiers such as polyoxyethylene monooleyl ether, polyoxyethylene monostearyl ether, polyoxyethylene monolauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan trioleate or polyoxyethylene sorbitan monolaurate; and, anionic emulsifiers such as sodium salts or ammonium salts of alkyl sulfonic acid, alkylbenzene sulfonic acid or alkyl phosphoric acid. Moreover, polyoxyalkylene group-containing anionic emulsifiers having an anionic group and a polyoxyalkylene group such as a polyoxyethylene group or polyoxypropylene group in a single molecule, and reactive anionic emulsifiers having the anionic group and a polymerizable unsaturated group in a single molecule can also be used. These emulsifiers can each be used alone or two or more types can be used in combination.

The above-mentioned emulsifiers can ordinarily be used within the range of 1 to 20 parts by weight to 100 parts by weight of the solid content of the unsaturated carboxylic acid- or acid anhydride-modified polyolefin (a).

The aqueous dispersion of a non-chlorine-based polyolefin (A) containing the unsaturated carboxylic acid- or acid anhydride-modified polyolefin (a) is thus obtained.

In addition, the aqueous dispersion of the unsaturated carboxylic acid- or acid anhydride-modified polyolefin (a) obtained in the manner described above can also be obtained in the form of an aqueous dispersion of a non-chlorine-based modified polyolefin (A) further containing an acrylic-modified unsaturated carboxylic acid- or acid anhydride-modified polyolefin by emulsification polymerization of an acrylic unsaturated monomer as previously listed in the explanation of acrylic modification in the presence of the water-dispersed unsaturated carboxylic acid- or acid anhydride-modified polyolefin (a).

### Polyol Resin (B):

A water-soluble or water-dispersible resin having at least two hydroxyl groups on average in a single molecule thereof is included in the water-soluble or water-dispersible polyol resin (B) used in the aqueous primer composition of the present invention, and examples of types of resins include acrylic resins, polyester resins, polyurethane resins, grafts of these resins, acrylic-modified or polyester-modified epoxy resins and self-crosslinking resins such as blocked isocyanate group-containing polyester resins, with water-soluble or water-dispersible acrylic resins and water-soluble or water-dispersible polyester resins being preferable.

Examples of water-soluble or water-dispersible acrylic resins include water-soluble acrylic resins having a weight average molecular weight within the range of 5,000 to 100,000 and preferably 5,000 to 50,000, and acrylic resin emulsions having a weight average molecular weight of 50,000 or more and preferably within the range of 100,000 to 1,000,000, which can ordinarily be obtained by copolymerizing a mixture comprised of a hydrophilic group-containing polymerizable unsaturated monomer such as a carboxyl group-containing polymerizable unsaturated monomer, a hydroxyl group-containing polymerizable unsaturated monomer and other polymerizable unsaturated monomers. Furthermore, the weight average molecular weight of the acrylic resin is the value obtained by converting the weight average molecular weight as determined by gel permeation chromatography using tetrahydrofuran for the solvent based on the weight average molecular weight of polystyrene. The HLC8120GPC (trade name, Tosoh Corporation) can be used for the gel permeation chromatography apparatus. In addition, four columns consisting of the TSKgel G-4000HxL, TSKgel G-3000HxL, TSKgel G-2500HxL and TSKgel G-2000HxL (trade names, all available from Tosoh Corporation) are used as the columns for gel permeation chromatography.

Examples of the above-mentioned carboxyl group-containing polymerizable unsaturated monomer include half monoalkyl esters of (meth)acrylic acid, crotic acid, maleic acid, fumaric acid, itaconic acid and dicarboxylic acids thereof, while examples of other hydrophilic group-containing polymerizable unsaturated monomers include polyalkylene chain-containing polymerizable unsaturated monomers such as polyethylene glycol (meth)acrylate or polypropylene glycol (meth)acrylate; and, sulfonic acid group-containing polymerizable unsaturated monomers such as 2-sulfoethyl (meth)acrylate or 2-acrylamide-2-methyl sulfonic acid.

Examples of the above-mentioned hydroxyl group-containing polymerizable unsaturated monomer include C₁ to C₂₁ hydroxyalkyl esters of (meth)acrylic acid such as 2-hydroxyethyl (meth)acrylate, 2-or 3-hydroxypropyl (meth)acrylate or 4-hydroxybutyl (meth)acrylate, and these can each be used alone or two or more types can be used in combination.

Examples of other polymerizable unsaturated monomers include C₁ to C₂₄ alkyl esters or cycloalkyl esters of (meth)acrylic acid such as methyl (meth)acrylate, ethyl (meth)acrylate, n- or i-propyl (meth)acrylate, n-, i- or t-butyl (meth)acrylate, 2-ethylhexyl (meth)acrylate, cyclohexyl (meth)acrylate, lauryl (meth)acrylate or isobornyl (meth)acrylate; glycidyl (meth)acrylate, acrylonitrile, acrylamide, dimethylaminoethyl methacrylate or 1,6-hexanediol diacrylate; vinyl aromatic compounds such as styrene or vinyltoluene; vinyl acetate and vinyl chloride, and these can each be used alone or two or more types can be used in combination.

There are no particular limitations on the method used to copolymerize the monomer mixture, and a known method can be used, examples of which include solution polymerization for the water-soluble acrylic resin and using emulsification polymerization for the acrylic resin emulsion.

In the case the acrylic resin is an acrylic resin emulsion obtained by emulsification polymerization, the acrylic resin emulsion may be an emulsion in the form of particles having a multilayered structure obtained by multiple stages of emulsification polymerization of a monomer mixture in the presence of water and an emulsifier.

Acidic groups such as carboxyl groups derived from the hydrophilic group-containing polymerizable unsaturated monomer in the above-mentioned water-soluble or water-dispersible acrylic resin can be neutralized as necessary using a basic substance. The basic substance is preferably soluble in water, examples of which include ammonia, methylamine, ethylamine, propylamine, butylamine, dimethylamine, trimethylamine, ethylenediamine, morpholine, methyl ethanolamine, dimethyl ethanolamine, diethanolamine, triethanolamine, diisopropanolamine and 2-amino-2-methyl propanol, and these can each be used alone or two or more types can be used in combination.

The water-soluble or water-dispersible polyester resin includes those obtained by neutralizing an oil-free or oil-modified polyester resin prepared by an esterification reaction using a polyvalent alcohol and a polybasic acid, and as necessary, a monobasic acid and an oily component (including oily fatty acids). The polyester resin can typically have a weight average molecular weight within the range of 3,000 to 100,000, preferably 4,000 to 65,000 and more preferably 5,000 to 30,000. The weight average molecular weight of the polyester resin can be measured using the same method used to measure the weight average molecular weight of the acrylic resin as previously described.

Examples of the polyvalent alcohol include ethylene glycol, diethylene glycol, propylene glycol, butanediol, pentanediol, hexanediol, 2,2-dimethyl propanediol, glycerin, trimethylol propane, pentaerythritol, and ethylene oxide addition products and propylene oxide addition products of bisphenol compounds, and these can each be used alone or two or more types can be used in combination. In addition, examples of the polybasic acid include phthalic acid, isophthalic acid, tetrahydrophthalic acid, hexahydrophthalic acid, maleic acid, succinic acid, adipic acid, sebacic acid, trimellitic acid, pyromellitic acid and acid anhydrides thereof, and these can each be used alone or two or more types can be used in combination. Moreover, examples of the monobasic acid include benzoic acid and t-butylbenzoic acid, while examples of the oily component include castor oil, dehydrated castor oil, safflower oil, soybean oil, linseed oil, tall oil, palm oil and fatty acids thereof, and these can each be used alone or two or more types can be used in combination.

In the above-mentioned polyester resin, introduction of a carboxyl group can be carried out by, for example, combining the use of a polybasic acid having a valence of three or more, such as trimellitic acid or pyromellitic acid, having three or more carboxyl groups in a molecule thereof as a portion of the polybasic acid component, or using a half ester addition product of a dicarboxylic acid as a portion of the raw material component and converting the half ester portion to a carboxyl group following the reaction. In addition, introduction of a hydroxyl group can be carried out by, for example, combining the use of a polyvalent alcohol having a valence of three or more, such as glycerin or trimethylol propane, having three or more hydroxyl groups in a molecular thereof as a portion of the polyvalent alcohol component.

Carboxyl groups present in the above-mentioned polyester resin can be neutralized as necessary using a basic substance as previously described.

The water-soluble or water-dispersible polyol resin (B) used in the aqueous primer composition of the present invention can have a hydroxyl value typically within the range of 10 to 200 mgKOH/g, preferably 20 to 175 mgKOH/g and more preferably 20 to 150 mgKOH/g, and have an acid value typically within the range of 1 to 100 mgKOH/g, preferably 5 to 85 mgKOH/g and more preferably 10 to 70 mgKOH/g, in consideration of compatibility with other components and the curability of the formed coated film.

### Pigment (C):

Examples of the pigment (C) used in the aqueous primer composition of the present invention include conductive pigments, coloring pigments and extender pigments, and the use of a conductive pigment in particular allows the obtaining of a primer composition that forms a conductive coated film, thereby enabling electrostatic coating of top coating paint.

The conductive pigment can be used without limitation provided it is capable of imparting electrical conductivity to the formed coated film, and may be in the form of particles, flakes, fibers (including whiskers) and so on, examples of which include carbon powder such as conductive carbon black and metal powders such as those of silver, nickel, copper, graphite or aluminum. Moreover, other examples include antimony-doped tin oxide, phosphorous-doped tin oxide, antimony oxide, zinc antimonate, titanium oxide, indium tin oxide, carbon or graphite whiskers coated with tin oxide and so forth on the surface thereof, and flaked mica coated with tin oxide or nickel on the surface thereof. These can each be used alone or two or more types can be used in combination. Conductive carbon black is used particularly preferably on the basis of economic considerations. Examples of commercially available conductive carbon black products include Vulcan XC-72 (trade name, Cabot Corporation), CONDUCTEX (trade name, Columbia Carbon) and Ketchen Black EC (trade name, Lion Akzo Co., Ltd.). In the case of using a conductive carbon black pigment for the pigment (C), it is preferably used particularly within the range of 1 to 50 parts by weight and more particularly 2 to 30 parts by weight based on 100 parts by weight of the total resin solid content in the composition.

Examples of the above-mentioned coloring pigments include titanium dioxide, red iron oxide, aluminum paste, azo-based pigments and phthalocyanine-based pigments, while examples of extender pigments include talc, silica, calcium carbonate, barium sulfate and zinc oxide.

The pigments listed above can each be used alone or two or more types can be used in combination.

Furthermore, in the case of using the primer composition of the present invention for a white paint, a white pigment, and particularly titanium oxide, is preferable for the pigment (C), and in consideration of design, chemical resistance and so on, the average particle diameter thereof is preferably within the range of about 0.05 to 2 µm, and particularly preferably 0.1 to 1 µm.

### Aqueous Primer Composition:

The aqueous primer composition of the present invention can be prepared by mixing the previously described aqueous dispersion of a non-chlorine-based modified polyolefin (A), the water-soluble or water-dispersible polyol resin (B) and the pigment (C) in accordance with ordinary methods, followed by diluting in a suitable aqueous medium such as deionized water.

The blending ratio of the components (A) and (B) can be made to be within the range of 20/80 to 85/15, preferably 25/75 to 75/25 and more preferably 30/70 to 70/30 as the solid component weight ratio of component (A) to component (B). If the solid component weight ratio of component (A) to component (B) deviates from the above-mentioned range, it becomes difficult to achieve the object of the present invention, and results in a high potential for decreases in adhesion and water resistance of the formed coated film.

In addition, the aqueous primer composition of the present invention can contain the pigment (C) within the range of 0.5 to 200 parts by weight, preferably 1 to 150 parts by weight and more preferably 2 to 150 parts by weight based on 100 parts by weight of the total resin solid content in the composition. If the content of the component (C) deviates from this range, it becomes difficult to achieve the object of the present invention, and results in a high potential for decreases in adhesion and water resistance of the formed coated film.

A vehicle component in the form of a urethane dispersion can also be contained in the aqueous primer composition of the present invention as necessary. The urethane dispersion is typically a dispersion obtained by dispersing in water a urethane polymer obtained by preliminarily reacting a diol, a diisocyante, and a dimethylol alkanoic acid as necessary, in the presence of an emulsifier while forcibly or spontaneously emulsifying. The urethane dispersion is preferably typically incorporated within the range of 5 to 65% by weight, particularly 7.5 to 50% by weight, and more particularly 10 to 40% by weight based on the total resin solid content in the composition in consideration of improving the physical properties of the coated film.

A crosslinking agent (D) can be further contained in the aqueous primer composition of the present invention as necessary. An amino resin and/or blocked polyisocyanate able to react with the hydroxyl groups in the above-mentioned polyol resin (B) is ordinarily used for the crosslinking agent (D). In addition, an epoxy compound able to react with the carboxyl groups in the modified polyolefin (a) may also be used for the crosslinking agent (D).

Examples of the above-mentioned amino resin include melamine resins, urea resins and benzoguanine resins, with melamine resins being particularly preferable. Particularly preferable examples of melamine resins include alkyl etherified melamine resins etherified with an alkyl group such as a methyl, ethyl, n-butyl, isobutyl, hexyl or 2-ethylhexyl group, and hydrophobic hydrophilic types may be used. These melamine resins may further have, for example, a methylol or imino group. The amino resin typically preferably has a number average molecular weight within the range of 500 to 5,000 and particularly 800 to 3,000. The number average molecular weight of the amino resin is the value obtained by converting weight average molecular weight as measured by gel permeation chromatography using tetrahydrofuran for the solvent and at a flow rate of 1.0 ml/min based on the weight average molecular weight of polystyrene. The HLC8120GPC (trade name, Tosoh Corporation) can be used for the gel permeation chromatography apparatus, and a column such as the TSKgel G-4000HxL, TSKgel G-3000HxL, TSKgel G-2500HxL or TSKgel G-2000HxL (trade names, all available from Tosoh Corporation) can be used as the column for gel permeation chromatography.

The above-mentioned blocked polyisocyanate is obtained by blocking the isocyanate groups of a polyisocyanate compound having two or more free isocyanate groups in a molecule thereof with a blocking agent.

Examples of the above-mentioned polyisocyanate compound include aliphatic polyisocyanates such as hexamethylene diisocyanate, trimethylhexamethylene diisocyanate, dimer acid diisocyanate or lysine diisocyanate; Biuret type addition products and isocyanurate ring addition products of these aliphatic polyisocyanates; alicyclic diisocyanates such as isophorone diisocyanate, 4,4'-methylenebis(cyclohexylisocyanate), methylcyclohexane-2,4- or 2,6-diisocyanate, 1,3- or 1,4-di(isocyanatomethyl) cyclohexane, 1,4-cyclohexane diisocyanate, 1,3-cyclohexane diisocyanate or 1,2-cyclohexane diisocyanate; Biuret type addition products and isocyanurate ring addition products of these alicyclic diisocyanates; aromatic diisocyanate compounds such as xylylene diisocyanate, tetramethylxylylene diisocyanate, tolylene diisocyanate, 4,4'-diphenylmethane diisocyanate (MDI), 1,5-naphthalene diisocyanate, 1,4-naphthalene diisocyanate, 4,4'-toluidine diisocyanate, 4,4'-diphenyl ether diisocyanate, (m- or p-)phenylene diisocyanate, 4,4'-biphenylene diisocyanate, 3,3'-dimethyl-4,4'-biphenylene diisocyanate, bis(4-isocyanatophenyl) sulfone or isopropylidene-bis(4-phenylisocyanate); Biuret type addition products and isocyanurate ring addition products of these aromatic diisocyanates; hydrogenated MDI and derivatives thereof; polyisocyanates having three or more isocyanate groups in a molecule thereof such as triphenylmethane-4,4',4"-triisocyanate, 1,3,5-triisocyantobenzene, 2,4,6-triisocyanatotoluene or 4,4'-dimethyldiphenylmethane-2,2',5,5'-tetraisocyanate; Biuret type addition products and isocyanurate ring addition products of these polyisocyanates; urethanation addition products obtained by reacting a polyisocyanate compound at a ratio such that the isocyanate groups are in excess with respect to the hydroxyl groups of a polyol such as ethylene glycol, propylene glycol, 1,4-butylene glycol, dimethylol propionic acid, polyalkylene glycol, trimethylol propane or hexanetriol; and, Biuret type addition products and isocyanurate ring addition products of these urethanation addition products.

The blocked polyisocyanate is obtained by adding a blocking agent to the isocyanate groups of the above-mentioned polyisocyanate compounds, and although the blocked polyisocyanate compound formed as a result of this addition is stable at room temperature, when heating to the baking temperature of a coated film (normally about 100 to 200°C), it is preferable that the blocking agent dissociates allowing the regeneration of free isocyanate groups. Examples of blocking agents that satisfy such requirements include phenol-based blocking agents such as phenol, cresol, xylenol, nitrophenol, ethylphenol, hydroxydiphenyl, butyl phenol, isopropyl phenol, nonyl phenol, octyl phenol or methyl hydroxybenzoate; lactam-based blocking agents such as ε-caprolactam, δ-valerolactam, γ-butyrolactam or β-propiolactam; aliphatic alcohol-based blocking agents such as methanol, ethanol, propyl alcohol, butyl alcohol, amyl alcohol or lauryl alcohol; ether-based blocking agents such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether or methoxymethanol; benzyl alcohol; glycolic acid; glycolic acid ester-based blocking agents such as methyl glycolate, ethyl glycolate or butyl glycolate; lactic acid ester-based blocking agents such as lactic acid, methyl lactate, ethyl lactate or butyl lactate; alcohol-based blocking agents such as methylol urea, methylol melamine, diacetone alcohol, 2-hydroxyethyl acrylate or 2-hydroxyethyl methacrylate; oxime-based blocking agents such as formamidoxime, acetoamidoxime, acetoxime, methyl ethyl ketoxime, diacetyl monoxime, benzophenone oxime or cyclohexane oxime; malonic acid dialkyl esters such as dimethyl malonate, diethyl malonate, diisopropyl malonate, di-n-butyl malonate, diethyl methyl malonate, benzyl methyl malonate or diphenyl malonate, acetoacetic acid esters such as methyl acetoacetate, ethyl acetoacetate, isopropyl acetoacetate, n-propyl acetoacetate, benzyl acetoacetate or phenyl acetoacetate, active methylene-based blocking agents such as acetyl acetone; mercaptan-based blocking agents such as butyl mercaptan, t-butyl mercaptan, hexyl mercaptan, t-dodecyl mercaptan, 2-mercaptobenzothiazole, thiophenol, methyl thiophenol or ethyl thiophenol; acid amide-based blocking agents such as acetoanilide, acetanisidide, acetotoluid, acrylamide, methacrylamide, acetic acid amide, stearic acid amide or benzamide; imide-based blocking agents such as succinic acid imide, phthalic acid imide or maleic acid imide; amine-based blocking agents such as diphenylamine, phenylnaphthylamine, xylidine, N-phenylxylidine, carbazole, aniline, naphthylamine, butylamine, dibutylamine or butylphenylamine; imidazole-based blocking agents such as imidazole or 2-ethylimidazole; pyrazole-based blocking agents such as 3,5-dimethylpyrazole; urea-based blocking agents such as urea, thiourea, ethylene urea, ethylene thiourea or diphenyl urea; carbamic acid ester-based blocking agents such as phenyl N-phenylcarbamate; imine-based blocking agents such as ethyleneimine or propyleneimine; and, sulfite-based blocking agents such as sodium bisulfite or potassium bisulfite. Blocked polyisocyanates obtained with active methylene-based blocking agents are particularly preferable in consideration of low-temperature curing and compatibility between the modified polyolefin (a) and the polyol resin (B).

In addition, a blocked polyisocyanate having been imparted with water dispersivity can also be used for the blocked polyisocyanate. Blocked polyisocyanates that have been imparted with water dispersivity include, for example, blocked polyisocyanates imparted with water dispersivity by blocking the isocyanate groups of a polyisocyanate compound with a blocking agent containing hydroxymonocarboxylic acid, and neutralizing carboxyl groups introduced by the hydroxymonocarboxylic acid, and blocked polyisocyanates imparted with water dispersivity as a result of adding or reacting a surfactant and so on.

There are no particular limitations on the above-mentioned epoxy compound provided it has at least two epoxy groups in a molecule thereof, and known epoxy compounds can be used, examples of which include bisphenol epoxy resins, Novolak epoxy resins and polyethylene glycol diglycidyl ether.

In consideration of compatibility between the modified polyolefin (a) and the polyol resin(B) along with the curability, adhesion and water resistance of the formed coated film, the content of the above-mentioned crosslinking agent (D) can generally be within the range of 3 to 40 parts by weight, preferably 4 to 30 parts by weight, and more preferably 5 to 20 parts by weight per 100 parts by weight of the total solid content of the aqueous dispersion of the modified polyolefin (A) and the polyol resin (B).

In consideration of the compatibility with paint, the aqueous primer composition of the present invention can further contain a terpene resin. Examples of the terpene resin include hydrogenation products of terpene, terpene-phenol and aromatic modified terpene resins. The terpene resin preferably has a melting point within the range of 30 to 120°C and particularly 40 to 100°C. The melting point of the terpene resin can be measured in the same manner as the case of the modified polyolefin (a). In addition, the terpene resin normally is incorporated at 30% by weight or less and preferably within the range of 5 to 20% by weight based on the total resin solid content in the composition.

Paint additives such as curing catalysts, rheology controllers, antifoaming agents and organic solvents can also be suitably incorporated in the aqueous primer composition of the present invention as necessary.

### Application Method:

The application of the aqueous primer composition provided by the present invention to a plastic molded product as previously described allows the formation of a coated film having superior adhesion, water resistance and solvent resistance.

A multilayered coated film can be formed by sequentially applying a colored base paint and a clear paint to a plastic molded product, and ultimately the coated surface thereof, coated with the aqueous primer composition of the present invention.

Examples of plastic molded products to which the aqueous primer composition of the present invention can be applied include automobile exterior surfaces such as bumpers, spoilers, grilles or fenders; and plastic molded products used for the exterior surfaces of home appliances, and although polyolefins obtained by (co)polymerizing one or more types of olefins having 2 to 10 carbon atoms such as ethylene, propylene, butylene or hexene are preferable for the material thereof, the aqueous primer composition of the present invention can also be applied to polycarbonates, ABS plastic, urethane resins, polyamides and so on.

These plastic molded products can be suitably subjected to degreasing treatment or rinsing treatment and so on using a method known per se prior to application of the primer composition of the present invention.

Application of the primer composition of the present invention can be carried out so that the dry film thickness on the plastic molded product is normally within the range of 1 to 30 µm and preferably 3 to 15 µm by using, for example, air spraying, air-less spraying, dipping or a brush. Following application of the primer composition, the resulting coated film surface can be cured by allowing to set for 1 to 60 minutes at room temperature or preheating for 1 to 60 minutes at a temperature of about 40 to 80°C as necessary, or by heating for about 20 to 40 minutes at a temperature of about 60 to 140°C and preferably about 70 to 120°C.

A colored base paint or clear paint can then finally be sequentially applied to the primer coated film formed in the manner described above using a 3C1B, 3C2B or 3C3B type of procedure.

A known colored base paint can be used for the above-mentioned colored base paint, and a colored base paint is ordinarily used that has an organic solvent and/or water as its primary solvent, and contains a coloring component such as a colored pigment, effect pigment or dye, and a resin component such as a base resin or crosslinking agent.

Examples of resins that can be used for the base resin used in the colored base paint include acrylic resins, polyester resins and alkyd resins having a crosslinking functional group such as a hydroxyl group, epoxy group, carboxyl group or silanol group. In addition, examples of crosslinking agents include amino resins such as melamine resins or urea resin, (blocked)polyisocyanates, polyepoxides and polycarboxylic acids capable of reacting with these functional groups.

Paint additives such as extender pigments, curing catalysts, ultraviolet absorbers, surface preparation agents, rheology controllers, antioxidants, antifoaming agents or waxes can further be suitably contained in the colored base paint as necessary.

The colored base paint can ordinarily be electrostatically coated onto the uncured or cured primer film at a dry film thickness within the range of 5 to 50 µm and preferably 10 to 20 µm, and the resulting paint film can be cured by allowing to set for 1 to 60 minutes at room temperature or preheating for 1 to 60 minutes at a temperature of about 40 to 80°C as necessary, or by heating for about 20 to 40 minutes at a temperature of about 60 to 140°C and preferably about 80 to 120°C.

In the case the primer composition of the present invention is to form a primer film having high whiteness in particular, a multilayered paint film can be formed having a high-whiteness pearl finish by applying an interfering pearl-colored base paint thereon. Moreover, a multilayered paint film may also be formed by sequentially applying a white base paint and an interfering pearl-colored base paint for the colored base paint film layer.

The above-mentioned clear paint is an organic solvent-based or aqueous thermosetting paint containing, for example, a resin component such as a base resin and a crosslinking agent, an organic solvent and water, and further incorporating as necessary paint additives such as ultraviolet absorbers, photostabilizers, curing catalysts, surface preparation agents, rheology controllers, antistatic agents, antifoaming agents or waxes, and a clear paint can be used that has a degree of transparency that enables the undercoating paint film to be visualized through the formed clear paint film.

Examples of the above-mentioned base resin include acrylic resins, polyester resins, alkyd resins, fluororesins, urethane resins and silicon-containing resins containing at least one type of crosslinking functional group such as a hydroxyl group, carboxyl group, silanol group or epoxy group, with a hydroxyl group-containing acrylic resin being particularly preferable. Examples of crosslinking agents include melamine resins, urea resins, (blocked)polyisocyanate compounds, epoxy compounds, carboxyl group-containing compounds, acid anhydrides and alkoxysilane group-containing compounds capable of reacting with these functional groups, with blocked isocyanate compounds being particularly preferable.

The clear paint is electrostatically applied to the uncured or cured colored base paint film at a dry film thickness within the range of 10 to 50 µm and preferably 20 to 40 µm, and the resulting paint film surface can be cured by allowing to set for 1 to 60 minutes at room temperature or preheating for 1 to 60 minutes at a temperature of about 40 to 80°C, or by heating for 20 to 40 minutes at a temperature of about 60 to 140°C and preferably a temperature of about 80 to 120°C.

Thus, a plastic molded product can be obtained in which a colored base paint film and clear paint film are coated onto the primer film according to the present invention.

Although the following provides a more detailed explanation of the present invention through examples thereof, the present invention is not limited to only these examples. Furthermore, the terms "parts" and "%" refer to "parts by weight" and "% by weight" unless indicated otherwise.

### Production Example 1: Production of Hydroxyl

### Group-Containing

### Acrylic Emulsion

144.5 parts of deionized water and 1.2 parts of Newcol 562SF (trade name, Nippon Nyukazai Co., Ltd., ammonium polyoxyethylene alkyl benzene sulfonate, active ingredient: 60%) were charged into a reactor equipped with a stirrer, a reflux condenser and a thermometer followed by stirring and mixing in a nitrogen air flow and raising the temperature to 80°C. Next, 1% of a monomer emulsion (I), comprised of 56.2 parts of cyclohexylmethacrylate, 20 parts of n-butyl acrylate, 21 parts of 2-hydroxyethyl acrylate, 2.8 parts of acrylic acid, 1.75 parts of Newcol 707SF (trade name, Nippon Nyukazai Co., Ltd., surfactant, active ingredient: 30%) and 94.3 parts of deionized water, and 5.2 parts of a 3% ammonium persulfate aqueous solution were introduced into a reaction vessel and held at 80°C for 15 minutes. Subsequently, the remainder of the monomer emulsion (I) was dropped into the reaction vessel over the course of 3 hours, and the mixture was aged for 1 hour following completion of dropping to obtain a hydroxyl group-containing acrylic emulsion (B-1) having an average particle diameter of 100 nm, an acid value of 22 mgKOH/g, a hydroxyl value of 101 mgKOH/g and a weight average molecular weight of about 200,000.

### Production Example 2 - Production of Hydroxyl

### Group- Containing

### Acrylic Resin Solution

40 parts of propylene glycol monomethyl ether were placed in a reactor equipped with a stirrer, a reflux condenser and a thermometer followed by heating to and holding at 120°C, and dropping in a mixture comprised of 53 parts of cyclohexyl methacrylate, 20 parts n-butyl acrylate, 21 parts of 2-hydroxyethyl acrylate, 6 parts of acrylic acid and 5 parts of azobisisobutyronitrile over the course of 3 hours. Following dripping, the mixture was aged for 1 hour at the same temperature followed by dropping in a mixture of 1 part of azobisdimethylvaleronitrile and 10 parts of propylene glycol monomethyl ether over the course of 1 hour, additionally aging for 1 hour, and adding 7.4 parts of dimethyl ethanolamine and 193 parts of deionized water while stirring to obtain a hydroxyl group-containing acrylic resin solution (B-2) having an acid value of 47 mgKOH/g, hydroxyl value of 101 mgKOH/g and weight average molecular weight of about 10,000.

### Production Example 3 - Production of Hydroxyl

### Group-Containing

### Polyester Resin Solution

105 parts of neopentyl glycol, 273 parts of trimethylol propane, 320 parts of butylethyl propanediol, 219 parts of adipic acid and 385 parts of isophthalic acid were placed in a reaction vessel, and after reacting for 6 hours at 220°C, 76 parts of trimellitic anhydride were added and reacted for 30 minutes at 170°C followed by the addition of 5.5 parts of dimethyl ethanolamine and 120 parts of deionized water while stirring to obtain a hydroxyl group-containing polyester resin solution (B-3) having an acid value of 35 mgKOH/g, hydroxyl value of 140 mgKOH/g and weight average molecular weight of about 5,000.

### Example 1

50 parts based on the solid content weight of an aqueous dispersion of maleic polypropylene (A-1) (polypropylene obtained using a metallocene catalyst modified by addition of 8% by weight of maleic acid, melting point: 70°C, Mw: about 70,000, Mw/Mn: about 3, equivalently neutralized with dimethyl ethanolamine, and further emulsified with water using 10 parts of emulsifier to 100 parts of the maleic polypropylene), 30 parts as the solid content weight of the hydroxyl group-containing acrylic emulsion (B-1), 20 parts as the solid content weight of X04-109B (trade name, Asahi Kasei Corporation, active methylene adduct of polyethylene oxide-modified polyisocyanate) and 3 parts of Ketchen Black EC600J (Lion Akzo Co., Ltd., conductive carbon black pigment) were blended in accordance with ordinary methods followed by dilution with deionized water to a solid content of 20% to obtain an aqueous primer (1).

### Example 2

An aqueous primer (2) was obtained by blending 50 parts as the solid content weight of the aqueous dispersion of maleic polypropylene (A-1), 30 parts as the solid content weight of the hydroxyl group-containing acrylic resin solution (B-2), 20 parts as the solid content weight of X04-109B and 3 parts of Ketchen Black EC600J followed by diluting with deionized water to a solid content of 20%.

### Example 3

An aqueous primer (3) was obtained by blending 50 parts as the solid content weight of the aqueous dispersion of maleic polypropylene (A-1), 30 parts as the solid content weight of the hydroxyl group-containing polyester resin solution (B-3), 20 parts as the solid content weight of X04-109B and 3 parts of Ketchen Black EC600J in accordance with ordinary methods followed by diluting with deionized water to a solid content of 20%.

### Example 4

An aqueous primer (4) was obtained by blending 30 parts as the solid content weight of the aqueous dispersion of maleic polypropylene (A-1), 20 parts as the solid content weight of the hydroxyl group-containing acrylic emulsion (B-1), 20 parts as the solid content weight of X04-109B, 30 parts as the solid content weight of WS-5000 (Mitsui Takeda Chemical, urethane dispersion) and 3 parts of Ketchen Black EC600J in accordance with ordinary methods followed by diluting with deionized water to a solid content of 20%.

### Example 5

40 parts as the solid content weight of an aqueous dispersion of an acrylic-modified maleic ethylene-propylene copolymer (A-2) (ethylene-propylene copolymer obtained using a metallocene-based catalyst (ethylene content: 10%) modified by addition of 4% by weight of maleic acid and further modified with an acrylate monomer mixture (glycidyl methacrylate/acrylic acid/n-butyl acrylate/cyclohexyl methacrylate = 3/5/20/72) at a ratio with the ethylene-propylene copolymer of 10/90, having a melting point of 70°C, Mw of about 80,000 and Mw/Mn of about 2, equivalently neutralized with diethyl ethanolamine and dispersed in water), 30 parts as the solid content weight of the hydroxyl group-containing polyester resin solution (B-3) and 30 parts as the solid content weight of Cymer 350 (Nihon Cytec Industries, melamine resin) and 5 parts of Ketchen Black EC600J were blended in accordance with ordinary methods followed by diluting with deionized water to a solid content of 20% to obtain an aqueous primer (5).

### Example 6

An aqueous primer (6) was obtained by blending 40 parts as the solid content weight of the aqueous dispersion of an acrylic-modified maleic ethylene-propylene copolymer (A-2), 20 parts as the solid content weight of the hydroxyl group-containing polyester resin solution (B-3), 30 parts as the solid content weight of Cymer 350, 10 parts as the solid content weight of L-816 (Chukyo Yushi, terpene resin) and 5 parts of Ketchen Black EC600J in accordance with ordinary methods followed by diluting with deionized water to a solid content of 20%.

### Comparative Example 1

50 parts as the solid content weight of the aqueous dispersion of a maleic polypropylene (A-3) (polypropylene obtained using a metallocene-based catalyst modified by the addition of 8% by weight of maleic acid, having a melting point of 130°C, Mw of about 160,000 and Mw/Mn of about 4, equivalently neutralized with dimethyl ethanolamine and dispersed in water using 10 parts of an emulsifier to 100 parts of the maleic polypropylene), 30 parts as the solid content weight of the hydroxyl group-containing acrylic emulsion (B-1), 20 parts as the solid content weight of X04-109B and 3 parts of Ketchen Black EC600J were blended in accordance with ordinary methods followed by diluting with deionized water to a solid content of 20% to obtain an aqueous primer (7).

### Comparative Example 2

An aqueous primer (8) was obtained by blending 10 parts as the solid content weight of the aqueous dispersion of maleic polypropylene (A-1), 70 parts of the hydroxyl group-containing acrylic emulsion (B-1), 20 parts as the solid content weight of X04-109B and 3 parts of Ketchen Black EC600J in accordance with ordinary methods followed by diluting with deionized water to a solid content of 20%.

### Comparative Example 3

An aqueous primer (9) was obtained by blending 10 parts as the solid content weight of the aqueous dispersion of maleic polypropylene (A-1), 70 parts as the solid content weight of the hydroxyl group-containing acrylic emulsion (B-1), 20 parts as the solid content weight of Cymer 350 and 3 parts of Ketchen Black EC600J in accordance with ordinary methods followed by diluting with deionized water to a solid content of 20%.

### Example 7 - Production of Test Painted Article

The aqueous primer (1) prepared in the above-mentioned Example 1 was spray-coated onto polypropylene (degreased) molded into a bumper to a dry film thickness of about 5 to 10 µm. After preheating for 3 minutes at 80°C, a colored base paint in the form of WBC #713T (Kansai Paint, aqueous colored base paint) was electrostatically coated thereon to a dry film thickness of about 15 µm. After again preheating for 3 minutes at 80°C, a clear paint in the form of Soflex #520 Clear (Kansai Paint, acrylic urethane-based solvent-type clear paint) was electrostatically coated to a dry film thickness of about 30 µm followed by heating and drying for 30 minutes at 120°C to produce a test painted article.

### Examples 8 to 12 and Comparative Examples 4 to 6

Various test painted articles were produced using the same procedure as Example 7 with the exception of using the paints shown in Table 1 instead of the aqueous primer (1) in the Example 7.

Each test painted article produced as described above underwent the performance tests described below. Those results are shown in Table 1.

### Performance Testing Methods:

*1: Finished appearance: Defects and luster of the paint film surface were evaluated visually. ○ indicates the absence of abnormalities, while × indicates the presence of at least one defect or a problem with luster.
*2: Initial adhesion: Cuts were made in the paint film surface with a cutter so as to reach the base material to form 100 squares measuring 2 mm × 2 mm. Adhesive cellophane tape was applied to the surface of the paint film and then rapidly peeled off at 20°C to investigate the number of squares on which paint remained.
*3: Water-resistant adhesion: A portion of the painted bumper was cut out, immersed for 10 days in warm water at 40°C, removed and dried followed by carrying out an adhesion test in the same manner as the initial adhesion test described above. In addition, the paint surface after removing from the warm water was evaluated visually. ○ indicates the absence of blistering, and × indicates the presence of blistering.
*4: Recoating adhesion: After allowing each test painted article to stand at room temperature for 7 days, reapplying the same paint to the paint surface thereof and curing, the test painted articles were again allowed to stand for 3 days at room temperature followed by carrying out an adhesion test in the same manner as the initial adhesion test described above.
*5: Xylol resistance: The surface of each paint film was rubbed back and forth 8 times with a piece of gauze soaked in xylene to observe adhesion of the paint surface and the condition of the paint surface with respect to wrinkles, blistering and peeling. O indicates the absence of abnormalities, while × indicates the presence of at least one abnormality.

**Table 1**

| | Example 7 | Example 8 | Example 9 | Example 10 | Example 11 | Example 12 | Comparative Example 4 | Comparative Example 5 | Comparative Example 6 |
|---|---|---|---|---|---|---|---|---|---|
| Aqueous primer | (1) | (2) | (3) | (4) | (5) | (6) | (7) | (8) | (9) |
| Appearance Defects | | | | | | | | | |
| | ○ | ○ | ○ | ○ | ○ | ○ | × | ○ | ○ |
| Luster | ○ | ○ | ○ | ○ | ○ | ○ | × | Δ | Δ |
| Initial adhesion | 100/ 100 | 100/ 100 | 100/ 100 | 100/ 100 | 100/ 100 | 100/ 100 | 0/100 | 0/100 | 0/100 |
| Water-resistant adhesion | 100/ 100 | 100/ 100 | 100/ 100 | 100/ 100 | 100/ 100 | 100/ 100 | 0/100 | 0/100 | 0/100 |
| Blistering after water immersion | ○ | ○ | ○ | ○ | ○ | ○ | × | × | × |
| Recoating adhesion | ○ | ○ | ○ | ○ | ○ | ○ | ○ | ○ | ○ |
| Xylol resistance | ○ | ○ | ○ | ○ | ○ | ○ | ○ | ○ | ○ |

## Claims

1. An aqueous primer composition comprising:
(A) an aqueous dispersion of a non-chlorine-based modified polyolefin comprising the dispersion of an unsaturated carboxylic acid- or acid anhydride-modified polyolefin (a), having a melting point of 120°C or lower and a weight average molecular weight within the range of 50,000 to 150,000, in an aqueous medium;
(B) a water-soluble or water-dispersible polyol resin; and
(C) a pigment,
wherein the solid content weight ratio of component (A) to component (B) is within the range of 20/80 to 85/15, and component (C) is contained within the range of 0.5 to 200 parts by weight based on 100 parts by weight of the total resin solid content in the composition.

2. The aqueous primer composition according to claim 1, wherein the unsaturated carboxylic acid- or acid anhydride-modified polyolefin (a) contains propylene as a polymerized unit thereof, and the weight ratio of the propylene unit in the modified polyolefin (a) is within the range of 0.5 to 1.

3. The aqueous primer composition according to claim 1, wherein the unsaturated carboxylic acid- or acid anhydride-modified polyolefin (a) has a melting point within the range of 30 to 110°C and a weight average molecular weight within the range of 55,000 to 135,000.

4. The aqueous primer composition according to claim 1, wherein the unsaturated carboxylic acid- or acid anhydride-modified polyolefin (a) has a melting calorific value within the range of 1 to 50 mJ/mg.

5. The aqueous primer composition according to claim 1, wherein the unsaturated carboxylic acid- or acid anhydride-modified polyolefin (a) has a ratio of weight average molecular weight to number average molecular weight (Mw/Mn) within the range of 1.5 to 7.0.

6. The aqueous primer composition according to claim 1, wherein the polyolefin in the unsaturated carboxylic acid- or acid anhydride-modified polyolefin (a) is produced using a single-site catalyst for the polymerization catalyst.

7. The aqueous primer composition according to claim 1, wherein the unsaturated carboxylic acid- or acid anhydride-modified polyolefin (a) is an acrylic-modified polyolefin.

8. The aqueous primer composition according to claim 1, wherein the aqueous dispersion of a non-chlorine-based modified polyolefin (A) is obtained by neutralizing the carboxyl groups in the unsaturated carboxylic acid- or acid anhydride-modified polyolefin (a) with an amine compound and/or putting into an aqueous dispersion with an emulsifier.

9. The aqueous primer composition according to claim 1, wherein the polyol resin (B) is a water-soluble or water-dispersible acrylic resin or a water-soluble or water-dispersible polyester resin.

10. The aqueous primer composition according to claim 1, wherein the polyol resin (B) has a hydroxyl value within the range of 20 to 200 mgKOH/g and an acid value within the range of 1 to 100 mgKOH/g.

11. The aqueous primer composition according to claim 1, wherein the solid content weight ratio of component (A) to component (B) is within the range of 25/75 to 75/25.

12. The aqueous primer composition according to claim 1, wherein the pigment (C) is a conductive pigment.

13. The aqueous primer composition according to claim 1, wherein the pigment (C) is contained within the range of 1 to 150 parts by weight based on 100 parts by weight of the total resin solid content in the composition.

14. The aqueous primer composition according to claim 1, which further contains a crosslinking agent (D).

15. The aqueous primer composition according to claim 14, wherein the crosslinking agent (D) is an amine resin or a blocked polyisocyanate.

16. The aqueous primer composition according to claim 1, which further contains a urethane dispersion.

17. The aqueous primer composition according to claim 1, which further contains a terpene resin.

18. A method for coating a plastic molded product, comprising: applying the aqueous primer composition according to claim 1 to a plastic molded product; and then sequentially applying a colored base paint and a clear paint to the coated surface thereof.

19. A plastic molded product coated according to the method according to claim 18.
